# EUROPÄISCHE PATENTSCHRIFT

(11) **EP 2 732 242 B1**
(45) Veröffentlichungstag und Bekanntmachung des Hinweises auf die Patenterteilung: **22.07.2015**
(21) Anmeldenummer: 12730217.2
(22) Anmeldetag: 28.06.2012
(51) Int. Cl.: G01C 22/00, G06T 7/20, G06K 9/00

(54) **VERFAHREN UND VORRICHTUNG ZUR SCHRITTERKENNUNG EINES FUSSGÄNGERS FÜR EIN TRAGBARES ENDGERÄT**
METHOD AND DEVICE FOR DETECTING THE GAIT OF A PEDESTRIAN FOR A PORTABLE TERMINAL
PROCÉDÉ ET DISPOSITIF PERMETTANT DE RECONNAÎTRE LES PAS D'UN PIÉTON, DESTINÉS À UN TERMINAL PORTABLE

(30) Priorität: 14.07.2011 DE 102011079187
(43) Veröffentlichungstag der Anmeldung: 21.05.2014
(73) Patentinhaber: Bayerische Motoren Werke Aktiengesellschaft, 80809 München (DE)
(72) Erfinder: ISERT, Carsten, 80333 München (DE); GUSENBAUER, Dominik, 80807 München (DE); AUBECK, Ferenc, 80992 München (DE)
(86) Internationale Anmeldenummer: PCT/EP2012/062612
(87) Internationale Veröffentlichungsnummer: WO 2013/007532

(56) Entgegenhaltungen:
- US-A1- 2010 024 531
- LAURA RUOTSALAINEN ET AL: "Overview of methods for visual-aided pedestrian navigation", UBIQUITOUS POSITIONING INDOOR NAVIGATION AND LOCATION BASED SERVICE (UPINLBS), 2010, IEEE, PISCATAWAY, NJ, USA, 14. Oktober 2010 (2010-10-14), Seiten 1-10, XP031814873, ISBN: 978-1-4244-7880-4

## Beschreibung

Die Erfindung betrifft ein Verfahren und eine Vorrichtung zur Schritterkennung eines Fußgängers für ein tragbares Endgerät, das eine Aufnahmeeinheit umfasst. Ferner betrifft die Erfindung das tragbare Endgerät.

Im Bereich der Personennavigation haben sich Navigationsgeräte, die Satellitensignale für eine Positionsbestimmung nutzen, in vielen Anwendungsbereichen durchgesetzt, z.B. als mitgeführtes Global Positioning System Empfangsgerät (GPS-Empfangsgerät) für den Wanderer und Bergsteiger oder für den Touristen zu Fuß in einer Stadt. Solche Navigationsgeräte haben jedoch den Nachteil, dass eine Navigation nur im Freien einwandfrei funktioniert. Für Personen, die sich in Gebäuden aufhalten, sind solche Navigationsgeräte, die Satellitensignale für eine Positionsbestimmung nutzen, nicht geeignet und können daher den Bedarf an Bewegungs- und Positionsinformationen in Untergeschossen großer Städte, in Kaufhäusern, in Museen, in Flughäfen und Bahnhöfen sowie in fremden Firmengeländen oder Behördengebäuden nicht befriedigen. In solchen Bereichen kommen heute dedizierte Systeme für Innenraumanwendungen, so genannte Indoor-Systeme, z. B. mit Infrarotbaken zum Einsatz, die einen hohen Infrastrukturaufwand erfordern.

LAURA RUOTSALAINEN ET AL: "Overview of methods for visual-aided pedestrian navigation", UBIQUITOUS POSITIONING INDOOR NAVIGATION AND LOCATION BASED SERVICE (UPINLBS), 2010, IEEE, PISCATAWAY, NJ, USA, 14. Oktober 2010 (2010-10-14), Seiten 1-10, ISBN: 978-1-4244-7880-4 offenbart ein Verfahren und eine Vorrichtung zur Schritterkennung eines Fussgängers für ein tragbares Endgerät, das eine Aüfnähmeeinheit aufweist, wobei jeweils in einem von der Aufnahmeeinheit erfassten Bild einer Bildfolge ein Objekt detektiert wird, wobei die Position des Objektes in dem jeweiligen Bild ermittelt wird, und wobei abhängig von einer Positionsveränderung des Objektes zwischen zumindest zwei Bildern der Bildfolge ein Schritt des Fussgängers erkannt wird.

Die Aufgabe der Erfindung ist, ein Verfahren und eine Vorrichtung zur Schritterkennung eines Fußgängers für ein tragbares Endgerät sowie ein tragbares Endgerät zu schaffen, die eine zuverlässige und kostengünstige Schritterkennung des Fußgängers auch in Innenräumen ermöglichen.

Die Aufgabe wird gelöst durch die Merkmale der unabhängigen Patentansprüche. Vorteilhafte Weiterbildungen der Erfindung sind in den Unteransprüchen gekennzeichnet.

Gemäß einem ersten und zweiten Aspekt zeichnet sich die Erfindung aus durch ein Verfahren und eine korrespondierende Vorrichtung zur Schritterkennung eines Fußgängers für ein tragbares Endgerät, das eine Aufnahmeeinheit aufweist. Es wird jeweils in einem von der Aufnahmeeinheit erfassten Bild einer Bildfolge ein Objekt detektiert, das zumindest einen Teil eines Fußes und/oder eines Schuhs und/oder eines Beines repräsentiert. Die Position des Objektes in dem jeweiligen Bild wird ermittelt und abhängig von einer Positionsveränderung des Objektes zwischen zumindest zwei Bildern der Bildfolge wird ein Schritt des Fußgängers erkannt.

Ein Auswerten des jeweiligen Bildes ermöglicht, ein Erscheinen und Verschwinden des Fußes und/oder der Fußspitze des Fußgängers zu erkennen und für eine Schritterkennung, eine Schrittzählung und/oder eine Schrittlängenschätzung zunutzen. Das Ermitteln der Schritte kann vorteilhafterweise unabhängig von weiteren Hardwarekomponenten erfolgen, insbesondere unabhängige von weiteren Sensoren, die ausgebildet sind, Messdaten zu erfassen, die repräsentativ sind für eine Bewegung des Fußgängers. Dies ermöglicht eine kostengünstige Herstellung des Endgerätes. Das erfindungsgemäße Verfahren kann für eine Schritterkennung sowohl für Fußgänger, die sich in Gebäuden bewegen als auch für Fußgänger, die sich im Freien bewegen, genutzt werden. Ferner hat das erfindungsgemäße Verfahren den Vorteil, dass die Schritte auch bei einer langsamen Laufbewegung und/oder bei einer unregelmäßigen Laufbewegung zuverlässig erkannt werden können.

Beim Erfassen der jeweiligen Bilder ist das Endgerät vorzugsweise an dem Fußgänger derart angeordnet oder wird von dem Fußgänger derart gehalten, dass ein Bilderfassungsbereich der Aufnahmeeinheit jeweils einen vorgegebenen Bereich in Laufrichtung vor dem Fußgänger umfasst. Die Aufnahmeeinheit und/oder eine weitere geeignete ausgebildete Einheit des Endgerätes können ausgebildet sein, mittels Ausgabe von Signalen, beispielsweise optischen Signalen, dem Fußgänger eine vorgegebene Positionierung der Aufnahmeeinheit zu signalisieren.

In einer vorteilhaften Ausgestaltung wird das Objekt abhängig von einem Ähnlichkeitsvergleich eines vorgegebenen Musters mit dem jeweiligen Bild detektiert. Dies ermöglicht eine einfache und zuverlässige Detektion des Objektes.

In einer weiteren vorteilhaften Ausgestaltung wird das Muster ermittelt abhängig von einem Bildausschnitt eines der erfassten Bilder, welcher zumindest eine Fuß- und/oder Schuhspitze des Fußgängers umfasst. Dies ermöglicht, das Muster an spezifische Eigenschaften des Fußes beziehungsweise des Schuhs des Fußgängers anzupassen und damit eine Zuverlässigkeit der Objektdetektion und/oder der Schritterkennung zu erhöhen.

In einer weiteren vorteilhaften Ausgestaltung wird für die Bildfolge ein Verlauf der Position des Objekts ermittelt und abhängig von dem Verlauf der Schritt erkannt.
Vorteilhafterweise kann so der jeweilige Schritt sehr einfach und zuverlässig erkannt werden.

In einer weiteren vorteilhaften Ausgestaltung wird das Bild in mehrere Bildausschnitte unterteilt, wobei die Bildausschnitte überlappen können. Für jeden Bildausschnitt wird der Ähnlichkeitsvergleich mit dem Muster durchgeführt. Die Position des Objektes wird ermittelt abhängig von dem Bildausschnitt., der die größte Ähnlichkeit mit dem Muster aufweist.

In einer weiteren vorteilhaften Ausgestaltung weist das jeweilige Bild eine Matrix an Bildpunkten auf. Für sämtliche zentrale Bildpunkte, die jeweils einen Mittelpunkt der jeweiligen Bildausschnitte repräsentieren, wird jeweils ein Vergleichswert ermittelt, der ein Maß für die Ähnlichkeit des Musters mit dem jeweiligen Bildausschnitt repräsentiert. Abhängig von den ermittelten Vergleichswerten wird die Position des Objektes ermittelt. Vorteilhafterweise ermöglicht dies eine einfache Detektion des Objektes. Der Vergleichswert kann beispielsweise einen Kreuzkorrelationskoeffizienten repräsentieren, der für den jeweiligen zentralen Bildpunkt abhängig von einer Kreuzkorrelation des Bildausschnittes mit dem Muster ermittelt wird.

In einer weiteren vorteilhaften Ausgestaltung wird abhängig von den Vergleichswerten ein maximaler Vergleichswert ermittelt und wenn der maximale Vergleichswert einen vorgegebenen Grenzwert unterschreitet, wird das Muster angepasst. Ein Auswerten der maximalen Vergleichswerte ermöglicht, geänderte Verhältnisse im Umfeld des Fußgängers zu detektieren. Dies kann genutzt werden, um das Muster an die geänderten Verhältnisse anzupassen, beispielsweise das Muster an geänderte Helligkeitsverhältnisse anzupassen.

In einer weiteren vorteilhaften Ausgestaltung weisen die Bildpunkte des Bildes für eine vorgegebene Menge an Farbkanälen jeweils einen Farbwert auf. Für zumindest ein Teil der Menge an Farbkanälen werden die Vergleichswerte für den jeweiligen Farbkanal ermittelt. Vorteilhafterweise ermöglicht dies, einen zuverlässigen Ähnlichkeitsvergleich des Bildausschnitts mit dem Muster und kann somit einen Beitrag leisten dazu, dass der jeweilige Schritt sehr einfach und zuverlässig erkannt werden kann. Der jeweilige Farbkanal repräsentiert hierbei eine Grundfarbe eines Farbraums, die zur Speicherung des Bildes genutzt wird. Ein Rot-Grün-Blau-Bild (RGB-Bild) weist beispielsweise drei Farbkanäle auf, jeweils einen für Rot, Grün und Blau. Ein CYMK-Bild (Cyan, Yellow, Magenta und Black) weist vier Farbkanäle auf, jeweils einen für Cyan, Gelb, Magenta und den Schwarzanteil.

In einer weiteren vorteilhaften Ausgestaltung weisen die Bildpunkte des Bildes jeweils einen Grauwert auf aus einer vorgegebenen Menge an Grauwerten. Vor dem Ähnlichkeitsvergleich wird abhängig von den Grauwerten von zumindest einem Teil der Bildpunkte ein mittlerer Grauwert des Bildes ermittelt und das Bild in ein binäres Bild, bei dem die jeweiligen Bildpunkte nur einen von zwei möglichen Grauwerten annehmen können, derart umgewandelt wird, dass abhängig von dem mittleren Grauwert und dem Grauwert des jeweiligen Bildpunktes, der jeweiligen Bildpunkt einen vorgegeben ersten oder zweiten Grauwert aufweist. Vorteilhafterweise ermöglicht dies eine sehr einfache und schnelle Detektion des Objektes. Bei dem binären Bild repräsentiert vorzugweise der erste Grauwert die Farbe Weiß und der zweite Grauwert die Farbe Schwarz. Für das Ermitteln des mittleren Grauwertes kann beispielsweise ein Grauwert-Histogramm für das Bild ermittelt werden und abhängig von einer Varianz der Grauwerte der mittlere Grauwert ermittelt werden.

Gemäß einem dritten Aspekt zeichnet sich die Erfindung aus durch ein tragbares Endgerät, das eine Aufnahmeeinheit und eine Vorrichtung gemäß dem zweiten Aspekt aufweist. Vorteilhafte Ausgestaltungen des ersten und zweiten Aspekts gelten hierbei auch für den dritten Aspekt.

Ausführungsbeispiele der Erfindung sind im Folgenden anhand der schematischen Zeichnungen erläutert.

Es zeigen:
- Figur 1: ein beispielhaftes Blockschaltbild für ein tragbares Endgerät,
- Figur 2: ein beispielhaftes Ablaufdiagram für ein Programm zur Schritterkennung eines Fußgängers,
- Figur 3: ein beispielhaften Werteverlauf einer für ein Bild ermittelten Korrelationsmatrix,
- Figur 4: ein beispielhafter Verlauf der Position des Objekts in einer Bildfolge und
- Figur 5: ein beispielhafter Signalverlauf eines Beschleunigungssensors, der für eine Bewegungsdetektion von dem Fußgänger mitgeführt wird.

Elemente gleicher Konstruktion oder Funktion sind figurenübergreifend mit den gleichen Bezugszeichen versehen.

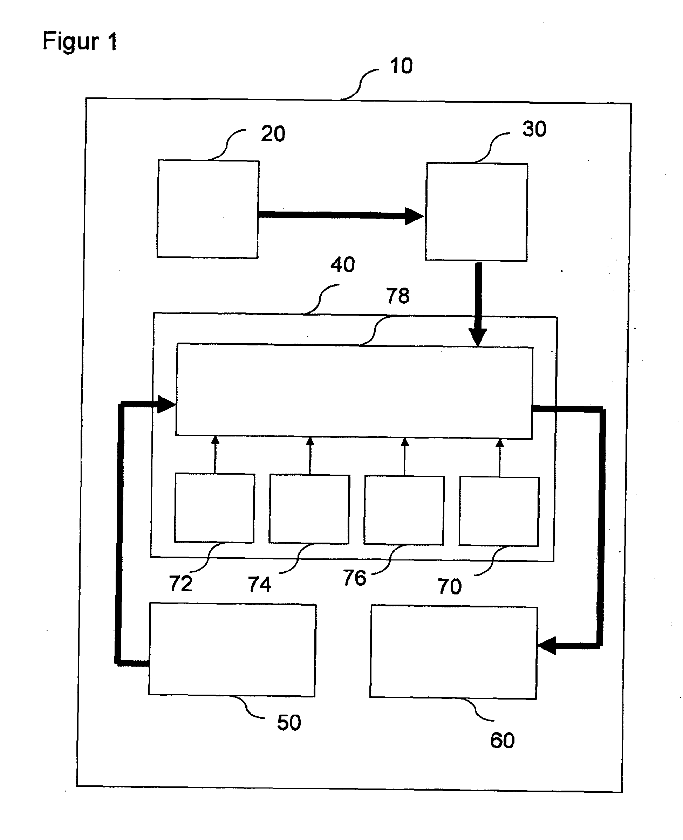

Figur 1 zeigt ein tragbares Endgerät 10. Das tragbare Endgerät 10 ist beispielsweise als Smartphone und/oder als persönlicher digitaler Assistenten (PDA) und/oder als tragbarer Computer ausgebildet.

Das tragbare Endgerät 10 umfasst beispielsweise eine Aufnahmeeinheit 20 und eine Bildverarbeitungseinheit 30, die auch als Vorrichtung zur Schritterkennung eines Fußgängers bezeichnet werden kann. Die Aufnahmeeinheit 20 ist beispielsweise als digitale Kamera ausgebildet.

Für ein Erfassen von Bildern mit der Aufnahmeeinheit 20 für eine Auswertung durch die Bildverarbeitungseinheit 30 ist das Endgerät 10 vorzugsweise an dem Fußgänger derart angeordnet oder wird von dem Fußgänger derart gehalten, dass ein Bilderfassungsbereich der Aufnahmeeinheit 20 jeweils einen vorgegebenen Bereich in Laufrichtung vor dem Fußgänger umfasst. Eine geeignete Position der Aufnahmeeinheit 20 zum Erfassen des jeweiligen Bildes korrespondiert zu einer Halteposition einer Landkarte, die der Fußgänger zum Lesen der Landkarte in Laufrichtung vor sich hält.

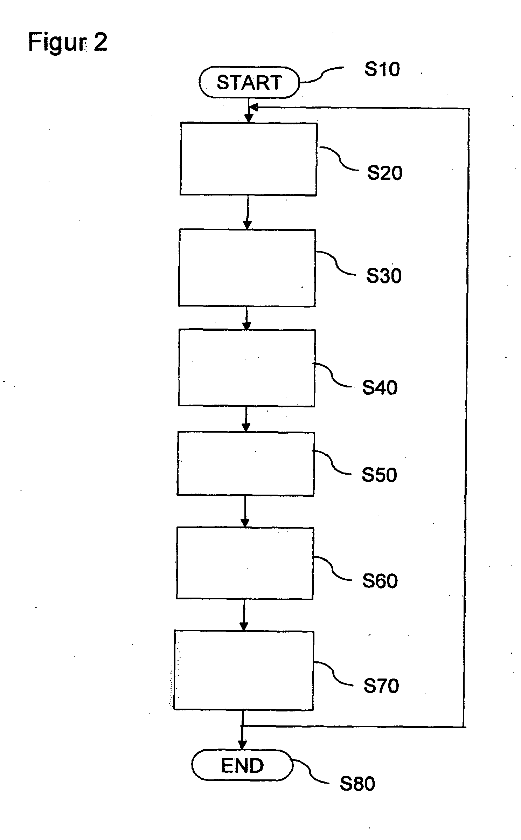

Die Bildverarbeitungseinheit 30 umfasst beispielsweise einen Programmspeicher. In dem Programmspeicher ist beispielsweise ein Programm zur Schritterkennung des Fußgängers gespeichert. Das Programm dient beispielsweise dazu, Schritterkennungsdaten für eine Personennavigation bereitzustellen. Beispielhaft wird das Programm später unter Bezug auf Figur 2 erläutert.

Ferner umfasst das tragbare Endgerät 10 gemäß Figur 1 beispielsweise eine Navigationseinrichtung 40 für Fußgänger. Das tragbare Endgerät 10 kann beispielsweise zumindest eine Eingabe- 50 und zumindest eine Ausgabeeinheit 60 aufweisen, die mit der Navigationseinrichtung 40 gekoppelt sind. Die zumindest eine Eingabeeinheit 50 kann beispielsweise eine Vielzahl von Tastenelemente aufweisen mittels derer ein Benutzer beispielsweise eine Startpunkt und/oder einen Zielpunkt für eine Routenermittlung eingeben kann. Mittels der Ausgabeeinheit 60, die beispielsweise ein Display und/oder einen Lautsprecher umfasst, kann beispielsweise eine aktuelle Position und/oder einem Benutzer eine ermittelte Route signalisiert werden.

Ferner kann die Navigationseinrichtung 40 beispielsweise ein GPS-Modul 70 umfassen sowie einen Magnetometer 74, ein Gyroskop 76 und/oder einen Beschleunigungssensor 72, die jeweils mit einer Steuereinheit 78 der Navigationseinrichtung 40 gekoppelt sind.

Die Steuereinheit 78 der Navigationseinrichtung 40 ist beispielsweise ausgebildet, abhängig von zumindest einem erfassten Messsignal des Beschleunigungssensors 72 Schritte des Fußgängers zu detektieren.

Die Steuereinheit 78 der Navigationseinrichtung 40 ist beispielsweise derart mit der Bildverarbeitungseinheit 30 gekoppelt, dass Daten, die von der Bildverarbeitungseinheit 30 ermittelt werden, an die Steuereinheit 78 der Navigationseinrichtung 40 weitergeleitet werden können. Die Daten können vorteilhafterweise genutzt werden, Schritterkennungsdaten, die von der Steuereinheit 78 abhängig von dem zumindest einen Messsignal des Beschleunigungssensors 72 ermittelt wurden, zu verifizieren. Alternativ oder zusätzlich ist möglich, dass die von der Bildverarbeitungseinheit 30 weiter geleiteten Daten genutzt werden, eine aktuelle Position des Fußgängers, eine Schrittlänge des Fußgängers und/oder eine Bewegungsrichtung des Fußgängers zu ermitteln.

Figur 2 zeigt ein Ablaufdiagramm für das Programm zur Schritterkennung des Fußgängers.

Das Programm wird vorzugsweise in einem Schritt S10 gestartet, in dem gegebenenfalls Variablen initialisiert werden, zum Beispiel Zähler.

In einem Schritt S20 kann eine digitale Vorverarbeitung eines von der Aufnahmeeinheit 20 erfassten Bildes erfolgen. Das Bild ist beispielsweise ein digitales Bild, das eine Matrix an Bildpunkten aufweist. Das Bild kann beispielsweise in Bezug auf eine Bildebene in Richtung einer horizontalen Achse x eine erste Anzahl Bildpunkte aufweisen und in Richtung einer vertikalen Achse y eine zweite Anzahl Bildpunkte. Die Vorverarbeitung kann beispielsweise eine Filterung des Bildes umfassen. Alternativ oder zusätzlich kann beispielsweise ein von der Aufnahmeeinheit 20 erfasstes Bild, wenn es ein Farbbild ist, in ein Schwarz-Weiß-Bild gewandelt werden, bei dem die jeweiligen Bildpunkte des Bildes einen Grauwert aufweisen aus einer vorgegebenen Menge an Grauwerten. Zum Beispiel kann hierbei jedem Farbwert ein Grauwert zugeordnet werden. Zusätzlich oder alternativ ist möglich, dass das Bild in ein binäres Bild gewandelt wird, bei dem die jeweiligen Bildpunkte nur einen von zwei möglichen Grauwerten annehmen können. Beispielsweise kann abhängig von zumindest einem Teil der Bildpunkte des Bildes ein mittlerer Grauwert des Bildes ermittelt werden und das Bild derart in ein binäres Bild umgesetzt werden, dass abhängig von dem mittleren Grauwert und dem Grauwert des jeweiligen Bildpunktes, der jeweiligen Bildpunkt einen ersten oder zweiten Grauwert aufweist.

In einem Schritt S30 wird in dem aufbereiteten Bild ein Objekt detektiert, das zumindest einen Teil eines Fußes und/oder eines Schuhs und/oder eines Beines repräsentiert. Beispielsweise wird das Objekt abhängig von einem Ähnlichkeitsvergleich eines vorgegebenen Musters mit dem jeweiligen Bild detektiert. Das Muster weist vorzugsweise eine zweite Matrix an Bildpunkten auf. Das Muster kann beispielsweise in Bezug auf eine Bildebene des Bildes in horizontaler Richtung eine dritte Anzahl Bildpunkte aufweisen und in vertikaler Richtung eine vierte Anzahl Bildpunkte. Vorzugsweise ist die Anzahl der Bildpunkte des Musters kleiner als die Anzahl der Bildpunkte des jeweiligen Bildes.

Für die Objektdetektion kann das Bild in mehrere Bildausschnitte unterteilt werden. Für sämtliche zentralen Bildpunkte, die jeweils einen Mittelpunkt des jeweiligen Bildausschnittes repräsentieren, kann ein Vergleichswert ermittelt werden, der ein Maß für die Ähnlichkeit des Musters mit dem Bildausschnitt repräsentiert. Die jeweiligen Bildausschnitte können hierbei überlappen. Für eine sehr zuverlässige Objektdetektion können die Bildausschnitte so gewählt werden, dass jeder Bildpunkt des Bildes jeweils auch ein zentraler Bildpunkt ist, für den ein Vergleichswert ermittelt wird. Ein erster Vergleichswert für den jeweiligen Bildpunkt kann beispielsweise abhängig von einer Kreuzkorrelationsfunktion ermittelt werden. Alternativ oder zusätzlich kann ein normierter Vergleichswert des jeweiligen Bildpunkt abhängig von einer normierten Kreuzkorrelationsfunktion ermittelt werden.

Im Falle, dass beispielsweise ein Farbbild ausgewertet wird und die Bildpunkte des Bildes für eine vorgegebene Menge an Farbkanälen jeweils einen Farbwert aufweisen, können beispielsweise für jeden Farbkanal die Vergleichswerte ermittelt werden. Ist das Bild beispielsweise als Rot-Grün-Blau-Bild ausgebildet, können für jeden Farbkanal, den roten, den grünen und den blauen Farbkanal, die Vergleichswerte ermittelt werden.

In einem Schritt S40 wird ein maximaler Vergleichswert ermittelt, beispielsweise abhängig von den normierten Vergleichswerten, die für das Bild ermittelt wurden.

In einem Schritt S50 kann beispielsweise geprüft werden, ob das Muster eine ausreichende Übereinstimmung mit dem zu detektierenden Objekt aufweist. Falls nicht, kann das Muster angepasst werden. Hierzu wird beispielsweise geprüft, ob der ermittelte maximale Vergleichswert einen vorgegebenen Grenzwert unterschreitet. Unterschreitet der maximale Vergleichswert den Grenzwert, wird das Muster angepasst. Um kurzfristige Schwankungen auszuschließen, können beispielsweise mehrere Bilder der Bildfolge ausgewertet werden. Dies kann beispielsweise derart erfolgen, dass das Muster angepasst wird, wenn die maximalen Vergleichswerte mehrere Bilder innerhalb einer vorgegeben Zeit den Grenzwert unterschreiten. Für ein Anpassen des Musters kann ein aktualisiertes Muster beispielsweise abhängig von einem Bildausschnitt eines der erfassten Bilder ermittelt werden, welcher zumindest eine Fuß- und/oder Schuhspitze des Fußgängers umfasst. Das aktualisierte Muster kann dann für die folgenden Ähnlichkeitsvergleiche genutzt werden.

In einem Schritt S60 wird die Position des detektierten Objekts ermittelt. Hierzu wird beispielsweise die Position des Bildpunktes in dem Bild ermittelt, der den maximalen Vergleichswert aufweist.

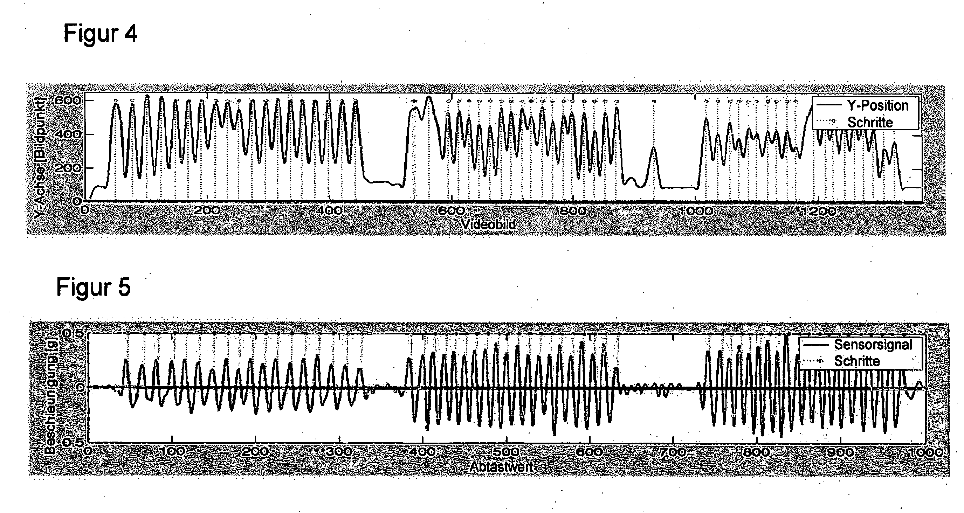

In einem Schritt S70 wird die Position des Objektes in dem Bild zumindest mit der Position des Objektes in einem weiteren Bild der Bildfolge vergleichen und abhängig von einer Positionsveränderung des Objektes ein Schritt des Fußgängers erkannt. Um eine Zuverlässigkeit der Schritterkennung zu verbessern kann beispielsweise ein Verlauf der Position des Objekts in der Bildfolge ermittelt und abhängig von dem Verlauf der Schritt detektiert werden. Hierzu kann zum Beispiel die Position des Objekts in einer Raumrichtung ausgewertet werden, die im Wesentlichen die Bewegungsrichtung des Fußgängers umfasst. Dadurch reduziert sich das zweidimensional Problem auf ein eindimensionales Problem. Figur 4 zeigt solch einen Verlauf der Position des Objektes entlang der vertikalen Achse y. Der Verlauf weist mehrere lokale Maxima auf, die jeweils als ein Schritt interpretiert werden.

Das Programm kann in einem Schritt S80 beendet werden. Vorzugsweise wird das Programm jedoch regelmäßig während eines aktiven Personennavigationsbetriebsmodus des Endgerätes 10 abgearbeitet.

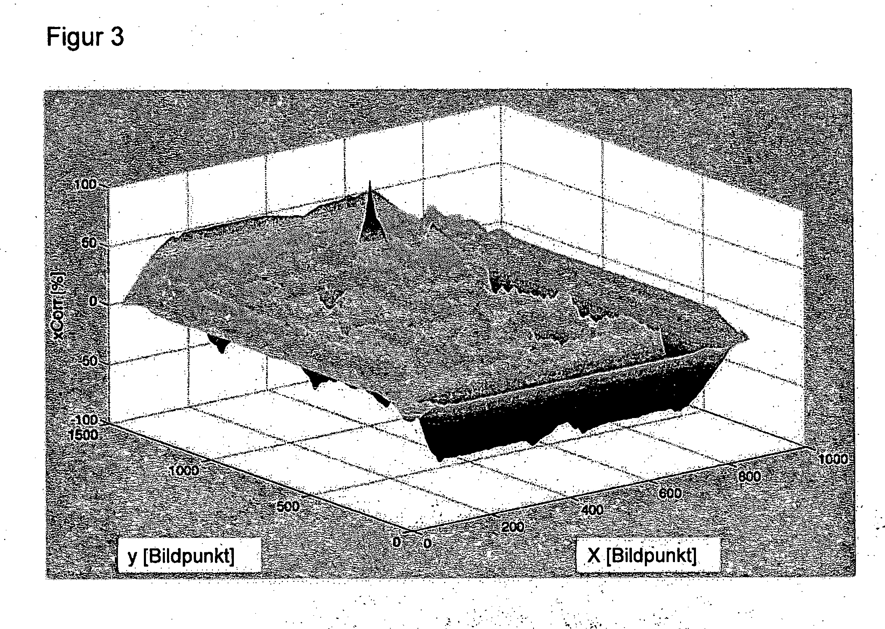

Figur 3 zeigt einen Werteverlauf für eine Korrelationsmatrix, die gemäß Gl. 2 für eines der erfassten Bilder ermittelt wurde. An der Position, an der das Muster die größte Ähnlichkeit mit dem Bildausschnitt aufweist, zeigt die Korrelationsmatrix ein Maximum.

Figur 4 zeigt für eine Bildfolge den Verlauf der Position des Objektes entlang der vertikalen Achse y des Bildes. Die Bildfolge wurde hierbei über mehrere Schritte des Fußgängers erfasst. Der Verlauf weist abwechselnd jeweils ein lokales Minimum und ein lokales Maximum auf. Beispielsweise können die lokalen Maxima jeweils als ein Schritt interpretiert werden.

Figur 5 zeigt im Vergleich zu Figur 4 ein Signalverlauf des Beschleunigungssensors 72, der für eine Bewegungsdetektion von dem Fußgänger mitgeführt wurde.

### Bezugszeichenliste

- 10: Endgerät
- 20: Aufnahmeeinheit
- 30: Bildverarbeitungseinheit
- 40: Navigationseinrichtung
- 50: Eingabeeinheit
- 60: Ausgabeeinheit
- 70: GPS-Modul
- 72: Beschleunigungssensor
- 74: Magnetometer
- 76: Gyroskop
- 78: Steuereinheit
- S10 ... S80: Programmschritte
- x: horizontale Achse
- y: vertikale Achse

## Patentansprüche

1. Verfahren zur Schritterkennung eines Fußgängers für ein tragbares Endgerät (10), das eine Aufnahmeeinheit (20) aufweist, bei dem
- jeweils in einem von der Aufnahmeeinheit (20) erfassten Bild einer Bildfolge ein Objekt detektiert wird, das zumindest einen Teil eines Fußes und/oder eines Schuhs und/oder eines Beines repräsentiert,
- die Position des Objektes in dem jeweiligen Bild ermittelt wird und
- abhängig von einer Positionsveränderung des Objektes zwischen zumindest zwei Bildern der Bildfolge ein Schritt des Fußgängers erkannt wird.

2. Verfahren nach Anspruch 1, bei dem das Objekt abhängig von einem Ähnlichkeitsvergleich eines vorgegebenen Musters mit dem jeweiligen Bild detektiert wird.

3. Verfahren nach Anspruch 2, bei dem das Muster ermittelt wird abhängig von einem Bildausschnitt eines der erfassten Bilder, welcher zumindest eine Fuß- und/oder Schuhspitze des Fußgängers umfasst.

4. Verfahren nach einem der vorstehenden Ansprüche, bei dem für die Bildfolge ein Verlauf der Position des Objekts ermittelt wird und abhängig von dem Verlauf der Schritt erkannt wird.

5. Verfahren nach einem der vorstehenden Ansprüch 2, 3, oder 4, insofern Anspruch 4 von Anspruch 2 abhängt, bei dem
- das Bild in mehrere Bildausschnitte unterteilt wird, wobei die Bildausschnitte überlappen können,
- für jeden Bildausschnitt der Ähnlichkeitsvergleich mit dem Muster durchgeführt wird und
- die Position des Objektes ermittelt wird abhängig von dem Bildausschnitt, der die größte Ähnlichkeit mit dem Muster aufweist.

6. Verfahren nach Anspruch 5, bei dem
- das jeweilige Bild eine Matrix an Bildpunkten aufweist,
- jeweils für einen zentralen Bildpunkt, der einen Mittelpunkt des jeweiligen Bildausschnittes repräsentiert; ein Vergleichswert ermittelt wird, der ein Maß für die Ähnlichkeit des Musters mit dem Bildausschnitt repräsentiert, und
- abhängig von den ermittelten Vergleichswerten die Position des Objektes ermittelt wird.

7. Verfahren nach Anspruch 6, bei dem
- abhängig von den Vergleichswerten ein maximaler Vergleichswert ermittelt wird und,
- wenn der maximale Vergleichswert einen vorgegebenen Grenzwert unterschreitet, das Muster angepasst wird.

8. Verfahren nach Anspruch 6 oder 7, bei dem
- die Bildpunkte des Bildes für eine vorgegebene Menge an Farbkanälen jeweils einen Farbwert aufweisen, und
- für zumindest ein Teil der Menge an Farbkanälen die Vergleichswerte für den jeweiligen Farbkanal ermittelt werden.

9. Verfahren nach Anspruch 6 oder 7, bei dem die Bildpunkte des Bildes jeweils einen Grauwert aufweisen aus einer vorgegebenen Menge an Grauwerten und vor dem Ähnlichkeitsvergleich
- abhängig von den Grauwerten von zumindest einem Teil der Bildpunkte ein mittlerer Grauwert des Bildes ermittelt wird und
- das Bild in ein binäres Bild, bei dem die jeweiligen Bildpunkte nur einen von zwei möglichen Grauwerten annehmen können, derart umgewandelt wird, dass abhängig von dem mittleren Grauwert und dem Grauwert des jeweiligen Bildpunktes, der jeweiligen Bildpunkt einen vorgegeben ersten oder zweiten Grauwert aufweist.

10. Vorrichtung zur Schritterkennung eines Fußgängers für ein tragbares Endgerät (10), das eine Aufnahmeeinheit (20) aufweist, wobei die Vorrichtung ausgebildet ist:
- jeweils in einem von der Aufnahmeeinheit (20) erfassten Bild einer Bildfolge ein Objekt zu detektieren, das zumindest einen Teil eines Fußes und/oder eines Schuhs und/oder eines Beines repräsentiert,
- die Position des Objektes in dem jeweiligen Bild zu ermitteln und
- abhängig von einer Positionsveränderung des Objektes in zumindest zwei Bildern der Bildfolge einen Schritt des Fußgängers zu erkennen.

11. Tragbares Endgerät (10), das eine Vorrichtung gemäß Anspruch 8 aufweist und die Aufnahmeeinheit (20).

## Claims

1. A method for recognising a pedestrian's step for a portable terminal (10), which has a recording unit (20), wherein
- an object, which represents at least a part of a foot and/or a shoe and/or a leg, is detected in an image of a sequence of images detected by the recording unit (20),
- the position of the object in the respective image is determined and
- depending on a position change of the object between at least two images of the sequence of images, a pedestrian's step is recognised.

2. A method according to claim 1, wherein the object is detected depending on a similarity comparison of a predetermined sample with the respective image.

3. A method according to claim 2, wherein the sample is determined depending on an image detail of one of the detected images, which comprises at least one foot tip and/or shoe tip of the pedestrian.

4. A method according to any one of the preceding claims, wherein a course of the position of the object is determined for the sequence of images and the step is recognised depending on the course.

5. A method according to any one of the preceding claims 2, 3 or 4 in so far as claim 4 depends on claim 2, wherein
- the image is divided into a plurality of image details, wherein the image details may overlap,
- the similarity comparison with the sample is carried out for each image detail and
- the position of the object is determined depending on the image detail which has the greatest similarity with the sample.

6. A method according to claim 5, wherein
- the respective image has a matrix of pixels,
- a comparison value, which represents a measure of the similarity of the sample with the image detail, is determined in each case for a central pixel, which represents a centre point of the respective image detail, and
- the position of the object is determined depending on the determined comparison values.

7. A method according to claim 6, wherein
- a maximum comparison value is determined depending on the comparison values and,
- when the maximum comparison value falls below a predetermined limit value, the sample is adapted.

8. A method according to claim 6 or 7, wherein
- the pixels of the image for a predetermined quantity of colour channels in each case have a colour value, and
- the comparison values for the respective colour channel are determined for at least some of the quantity of colour channels.

9. A method according to claim 6 or 7, wherein the pixels of the image in each case have a grey value from a predetermined quantity of grey values, and before the similarity comparison
- an average grey value of the image is determined depending on the grey values of at least some of the pixels and
- the image is converted into a binary image, wherein the respective pixels can only adopt one of two possible grey values in such a way that, depending on the average grey value and the grey value of the respective pixel, the respective pixel has a predetermined first and second grey value.

10. A device for recognising a pedestrian's step for a portable terminal (10), which has a recording unit (20), wherein the device is configured:
- to detect an object, which represents at least a part of a foot and/or a shoe and/or a leg, in an image of a sequence of images detected by the recording unit (20) in each case,
- to determine the position of the object in the respective image and
- to recognise a pedestrian's step depending on a position change of the object in at least two images of the sequence of images.

11. A portable terminal (10), which has a device according to claim 8 and the recording unit (20).

## Revendications

1. Procédé permettant de reconnaître le pas d'un piéton destiné à un terminal portatif (10) qui comporte une unité de réception (20) selon lequel :
- dans une image d'une séquence d'images détectée par l'unité de réception (20) on détecte respectivement un objet qui représente au moins une partie d'un pied et/ou d'une chaussure et/ou d'une jambe,
- on détermine la position de cet objet dans l'image respective, et
- en fonction d'une modification de la position de l'objet entre au moins deux images de la séquence d'images on reconnaît un pas du piéton.

2. Procédé conforme à la revendication 1, selon lequel on détecte l'objet en fonction d'une comparaison de similitude d'un modèle prédéfini et de l'image respective.

3. Procédé conforme à la revendication 2, selon lequel on détermine le modèle en fonction d'un détail d'image de l'une des images détectées qui comprend au moins une pointe du pied et/ou de la chaussure du piéton.

4. Procédé conforme à l'une des revendications précédentes selon lequel pour la séquence d'images on détecte les variations de la position de l'objet et l'on reconnaît le pas en fonction de ces variations.

5. Procédé conforme à l'une des revendications précédentes 2, 3 ou 4 dans la mesure où la revendication 4 dépend de la revendication 2 selon lequel :
on subdivise l'image en plusieurs détails d'image, ces détails d'image pouvant se chevaucher,
pour chacun des détails d'image on effectue la comparaison de similitude avec le modèle, et
on détecte la position de l'objet en fonction du détail d'image qui présente la plus grande similitude avec le modèle.

6. Procédé conforme à la revendication 5, selon lequel :
- l'image respective comprend une matrice de points d'image,
- pour un point d'image central qui représente le point médian du détail d'image respectif on détermine respectivement une valeur de comparaison qui représente une mesure de la similitude du modèle avec le détail d'images, et
- en fonction des valeurs de comparaison déterminées on détermine la position de l'objet.

7. Procédé conforme à la revendication 6, selon lequel :
- on détermine une valeur de comparaison maximum en fonction des valeurs de comparaison, et
- lorsque la valeur de comparaison maximum dépasse une valeur limite prédéfinie on adapte le modèle.

8. Procédé conforme à la revendication 6 ou 7 selon lequel :
- les points d'image de l'image présentent respectivement une valeur de couleurs pour une quantité prédéfinie de canaux de couleurs, et
- pour au moins une partie de la quantité de canaux de couleurs on détermine la valeur de comparaison pour le canal de couleurs respectif.

9. Procédé conforme à la revendication 6 ou 7 selon lequel les points d'image de l'image présentent respectivement une valeur de gris parmi une quantité prédéfinie de valeurs de gris et avant la comparaison de similitude,
- en fonction des valeurs de gris d'au moins une partie des points d'image on détermine une valeur de gris moyenne de l'image, et
- on transforme l'image en une image binaire dans laquelle les points d'image respectifs ne peuvent prendre qu'une valeur de gris parmi deux valeurs de gris possibles de sorte que, en fonction de la valeur de gris moyenne et de la valeur de gris du point d'image respectifs, ce point d'images respectif présente une première ou une seconde valeur de gris prédéfinie.

10. Dispositif pour permettre de reconnaître le pas d'un piéton destiné à un terminal portatif (10) qui comporte une unité de réception (20), ce dispositif étant réalisé pour :
- détecter respectivement dans une image d'une séquence d'images détectée par l'unité de réception (20) un objet qui représente au moins une partie d'un pied et/ou d'une chaussure et/ou d'une jambe,
- déterminer la position de l'objet dans l'image respective, et
- en fonction d'une modification de la position de l'objet reconnaître un pas du piéton dans au moins deux images de la séquence d'images.

11. Terminal portatif (10) qui comprend un dispositif conforme à la revendication 8 et l'unité de réception (20).
